(19) Europäisches Patentamt
European Patent Office
Office européen des brevets

(11) Publication number: **0 105 126**
**B1**

(12) **EUROPEAN PATENT SPECIFICATION**

(45) Date of publication of patent specification: **06.05.87**

(51) Int. Cl.$^4$: **H 04 N 5/32**

(21) Application number: **83107662.5**

(22) Date of filing: **03.08.83**

(54) **X-ray image correction apparatus.**

(30) Priority: **30.09.82 JP 171324/82**

(43) Date of publication of application:
**11.04.84 Bulletin 84/15**

(45) Publication of the grant of the patent:
**06.05.87 Bulletin 87/19**

(84) Designated Contracting States:
**DE FR GB NL**

(56) References cited:
**EP-A-0 037 722**
**EP-A-0 066 805**
**US-A-3 849 650**
**US-A-4 247 780**

(73) Proprietor: **Kabushiki Kaisha Toshiba**
**72, Horikawa-cho Saiwai-ku**
**Kawasaki-shi Kanagawa-ken 210 (JP)**

(72) Inventor: **Kageyama, Satoshi**
**6200-71, Hino-cho Konan-ku**
**Yokohama-shi (JP)**

(74) Representative: **Henkel, Feiler, Hänzel & Partner**
**Möhlstrasse 37**
**D-8000 München 80 (DE)**

**EP 0 105 126 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to an X-ray image correction apparatus employing a digital subtraction processing method in an X-ray diagnostic field, especially a digital angiography.

Recently in the X-ray diagnostic field, attention is attracted to an apparatus which obtains a diagnostic image of an object e.g., a patient from the picture signals of a television camera employing an X-ray image intensifier. Most widely accepted among such diagnostic apparatuses is the type employing the so-called digital subtraction process which applies to the images of a foreground subject obtained before and after the injection of an X-ray contrast medium into the object.

The above-mentioned subtraction process comprises the steps of producing a first X-ray image before the injection of the X-ray contrast medium to use said first X-ray image as a mask image, and producing a second X-ray image after the injection of the X-ray contrast medium to use the second X-ray image as a contrast image, and obtaining a diagnostic image by subjecting the first and second X-ray images to digital subtraction. For instance, in the angiography of the skull, digital subtraction is carried out between a simple skull X-ray image formed before the injection of the X-ray image contrast medium and an X-ray contrast image in which an angiographic image and cranial X-ray image are superposed on each other, thereby eliminating data on the cranial X-ray image. Hitherto, the above-mentioned process has been tried to obtain an angiographic image in high contrast.

Prior art document EP—A—0 037 722 discloses a dynamic image enhancement apparatus for generating a series of X-ray images of an object under examination. This apparatus comprises a video output for displaying the X-ray images, a first memory for storing in a digital form a mask image taken before an X-ray contrast medium is penetrated into the object, a second memory for storing in a digital form a contrast image taken after the X-ray contrast medium is penetrated into the object, and an arithmetic unit connected to said first and second storage means, for performing digital subtraction between the digital data of said mask and the contrast images.

An X-ray image correction apparatus employing the above-mentioned subtraction process significantly reduces the risk of invasion to which the patient is exposed and realizes real time processing of intravenous image according to intravenous angiography.

However, the above-mentioned subtraction process is still accompanied with the undermentioned drawbacks. An X-ray contrast medium injected into the vein of the patient is generally carried from the vein through the heart to the artery. Where, in such case, the aforementioned subtraction system is adopted, a first X-ray image is produced as a mask image before the injection of the X-ray contrast medium, and thereafter the X-ray contrast medium is injected. In a prescribed length of time after the injection of the X-ray contrast medium which is calculated from the running speed of the above-described medium through the blood vessel, an X-ray contrast image is taken as a second X-ray image. If a position of diagnosis was changed and the level of an X-ray image was displaced due to the movement of the patient during the X-ray radiography, it was sometimes impossible to produce an X-ray image with high precision by the aforementioned subtraction process. Namely, when a digital subtraction was carried out between a mask X-ray image (Fig. 1A) containing the background image A of, for example, the skull and an X-ray contrast image (Fig. 1B) containing an angiographic image B, it was impossible, as illustrated in Fig. 1C, to completely eliminate the aforementioned background image A from the subtracted image (Fig. 1C). This is because the patient moved before the completion of the X-ray contrast image of Fig. 1B, and the background image A inevitably shifted to the position indicated by a broken line shown in Fig. 1A.

This invention has been accomplished to eliminate the above-mentioned drawbacks of the conventional X-ray image correction apparatus, and is intended to provide an X-ray image correction apparatus which corrects an X-ray image obtained by the subtraction process, thereby providing a high quality angiographic X-ray image.

An object of the invention is to provide an X-ray image correction apparatus which can automatically correct a positional change in the diagnostic regions, which is represented in the X-ray mask image and/or X-ray contrast image.

Another object of the invention is to provide an X-ray image correction apparatus which can automatically correct an obscurity in the diagnostic regions, which is represented in one X-ray mask image and/or X-ray contrast image.

Those objects are accomplished according to the invention by providing an X-ray image correction apparatus which comprises: means for generating a series of X-ray images of an object under examination, means for displaying the X-ray images, first storage means for storing in a digital form a mask image selected from said series of X-ray images and taken before an X-ray contrast medium is penetrated into the object, second storage means for storing in a digital form a contrast image selected from said series of X-ray images and taken after the X-ray contrast medium is penetrated into the object, and subtraction means, connected to said first and second storage means, for performing digital subtraction between the digital data of said mask and the contrast images, said X-ray image correction apparatus being characterized by further comprising:

cursor means for defining a region of interest within said contrast image, while monitoring said contrast image displayed on the displaying means, in such a manner that the contrast level of said region of interest remains substantially unchanged even when the X-ray contrast medium is penetrated thereinto, error criterion producing means, connected to both said cursor means and the subtraction means, for producing error criterion by calculating an error evaluating function with respect to the degree of coincidence between said region of interest of the contrast image and a corresponding region of the mask image, and control means connected to both the error criteria producing means and the subtraction means, for controlling readout of one of said mask and contrast images data so as to minimize the error criterion.

The X-ray image correction apparatus of this invention is advantageous in that it can correct data of the displaced X-ray mask image and X-ray contrast image resulting from the patient's movement during the digital angiographic operation, thereby easily providing a good diagnostic X-ray image of high contrast.

This invention is best understood by reference to the accompanying drawings, of which:

Figs. 1A to 1C schematically show the drawbacks of a subtracted X-ray image obtained by the conventional X-ray image correction apparatus;

Figs. 2A, 2B are respectively a mask X-ray image and contrast X-ray image in which cursor regions are indicated;

Fig. 3A is a block circuit diagram of an X-ray image correction apparatus according to a first embodiment of this invention;

Fig. 3B is a block diagram of an inner circuit of the evaluator 9;

Fig. 3C is a block diagram of an inner circuit of the address generator 10;

Fig. 4 is a block circuit diagram of an X-ray image correction apparatus according to a second embodiment of the invention;

Fig. 5 is a block circuit diagram of an X-ray image correction apparatus according to a third embodiment of the invention; and

Figs. 6A through 6D show a flow chart of the X-ray image correction operation of the third embodiment.

Before proceeding with the preferred embodiments of this invention, its principle will now be described. The principle of the invention runs as follows. That portion of an X-ray contrast image (Fig. 2B) which is not affected by the X-ray contrast medium injected, for example, a bone's image which is not superposed on the image of the blood vessel, is designated as a specified cursor region "C". Evaluation is made of a positional displacement from an X-ray image information falling within said cursor region "C" to X-ray image information appearing on the mask X-ray image (Fig. 2A) which corresponds to the cursor region C. A subtracted X-ray image is so corrected by the result of the evaluation as to minimize the displacement between the above-mentioned X-ray images, thereby ensuring a high quality diagnostic X-ray image.

Fig. 3A is a block circuit diagram of an X-ray image correction apparatus according to a first embodiment of this invention. In this embodiment the principle of the invention is applied to the correction of a positional displacement between an X-ray mask image and an X-ray contrast image. That is, in this embodiment, the specified region by the cursor in the mask image is corrected with respect to that in the contrast image. Referring to Fig. 3A, reference numeral 1 denotes a contrast image memory and reference numeral 2 shows a mask image memory. These memories 1, 2 store different X-ray images in digital forms which are taken by an X-ray television camera equipped with an X-ray image intensifier (neither shown) before and after the injection of an X-ray contrast medium into the vein of an object e.g., a patient, or before and after the arrival of the X-ray contrast medium in the blood vessels. More specifically, the memory 2 stores a first X-ray image as a mask X-ray image taken before the injection or the arrival of the X-ray contrast medium into the blood vessels. The memory 1 stores a second X-ray image as a contrast X-ray image taken after the injection or the arrival of the X-ray contrast medium into them.

A subtraction processing circuit 3 is connected to the output terminals of those memories 1, 2. A first display device 4 is connected to the subtraction processing circuit 3. A second display device 6 is connected to the contrast X-ray image memory 1 via a mixer 5.

Numeral 7 denotes an input section provided with a two-dimensional address input device, e.g., a track ball for defining the size and position of the cursor in order to specify the cursor region shown in Fig. 2B, and an execute switch for correcting an X-ray image. The input section 7 is connected to the mixer 5 through a cursor generator 8 and to an evaluator 9, which in turn is connected to the subtraction processing circuit (referred to "subtraction circuit") 3 and the cursor generator 8. The evaluator 9 is designed to determine a degree of a pattern coincidence in a region defined by the cursor, and produce an error criterion "E(S)" corresponding to a determined positional displacement. In other words, the evaluation function "E" is determined from the contents of an output signal from the subtraction circuit 3, namely, subtraction data "S". The subtraction data "S" represents a background image which remains after subtraction. Now let it be assumed that "M" is taken as a coefficient in determining the amount of an averaged error. Then the evaluation function "E" is determined as follows:

$$E=\frac{1}{M}\Sigma|S| \qquad (1)$$

or

$$E=\frac{1}{M}\Sigma S^2 \qquad (2)$$

Thus the evaluator 9 produces the error criterion

E(S) as a value denoting the positional displacement. The evaluator 9 is connected to an address generator 10, which generates a signal specifying the data-reading address location (L, N) for the X-ray contrast image memory 1 and a signal specifying the data-reading addresses location (L+l, N+n) for the X-ray mask image memory 2. The values of the location (l,n) are variable according to the contents of a signal denoting the error criterion E(S) of a determined positional displacement, which is supplied from the evaluator 9, thereby correcting the positional displacement of X-ray mask image with respect to the X-ray contrast images.

Description will now be given of the operation of the apparatus shown in Fig. 3A. Now let it be assumed that an X-ray television camera (not shown) takes different diagnostic images before and after the injection or the arrival of an X-ray contrast medium into a patient's vein, and digital TV signals for the different diagnostic X-ray images are applied to the input terminals of the corresponding memories 1, 2. In this case, an X-ray diagnostic image taken before the injection or the arrival of the X-ray contrast medium the patient's vein is stored in the memory 2 as a mask image, an X-ray diagnostic image taken after the injection, or the arrival of the X-ray contrast medium is stored in the memory 1 as a contrast image. It should be understood that it is alternatively possible to once store the X-ray TV picture signals into an external memory having a large capacitance, and thereafter to supply those signals, by reading out of the external memory, to the memory 1 and 2.

Data on the mask image is read out of the mask image memory 2, and then displayed on the first display device 4. At this time, data on the contrast image is read out of the contrast image memory 1 and then displayed on the second display device 6. Observing the X-ray images displayed on the display devices 4 and 6 respectively, the operator defines by the input section 7 a cursor region "C" in that portion of the contrast image which remains unaffected by the injection of the X-ray contrast medium, by adjusting a track ball (not shown) for supplying two-dimensional address data. At this time, the cursor generator 8 generates a cursor region-specifying signal C in conformity with the size and position of the cursor region determined by the input section 7. The cursor region-specifying signal C is mixed in the mixer 5 with the X-ray contrast image signal to be displayed on the second display device 6. Fig. 2B shows X-ray images thus mixed.

On the other hand, both output signals from the contrast image memory 1 and mask image memory 2 are delivered to the subtraction circuit 3 and undergo the known digital subtraction. A signal denoting the result of the digital subtraction is displayed on the first display device 4, thereby disappearing the X-ray mask image. Output from the subtraction circuit 3 i.e., the subtraction data "S" together with the cursor-specifying signal are supplied to the evaluator 9. When under this condition, the execute switch (not shown) of the input section 7 is turned on, the evaluator 9 determines the degree of positional coincidence between a pattern appearing in the cursor region of the X-ray contrast image and a pattern appearing in that portion of the X-ray mask image which belongs to the cursor region, and then generates an error criterion "E(S)" representing the degree of the previously-explained coincidence.

As a result, the read address location (L+l, N+n) for the mask image memory 2 is varied in accordance with the error criterion E(S) corresponding to the above-mentioned positional displacement.

Namely, when the signal denoting the X-ray mask image is read out of the mask image memory 2, those address locations of the X-ray mask image memory 2 are respectively changed to L+l, N+n which are obtained by supplying results (l, n) of the evalution in the evaluator 9 to the address generator 10. In other words, a positional displacement between both X-ray images is corrected by shifting the position of the X-ray mask image, while the position of the X-ray contrast image remains fixed. Later, data is read out of the X-ray mask image memory 2 while the relative positions of the X-ray mask image are shifted, and also data is read out of the X-ray contrast image memory 1 while the positions of the X-ray contrast images remain unchanged.

As a result, an image obtained by subtraction between both X-ray images and later displayed on the first display device 4 is a pattern free from the above-mentioned positional displacement, and consequently can be used as a reliable diagnostic X-ray image (subtracted image).

When the input section 7 designates the cursor region observing the subtracted and corrected X-ray image represented on the first display device 4 and the execute switch is repeatedly actuated, it is possible to correct the positional displacement between the mask and the subtraction X-ray images with high precision and produce very reliable diagnostic X-ray images. Another process of automatically correcting a positional displacement between the X-ray mask image and the X-ray contrast image can be effected simply by defining the cursor region and the actuation of the switch only once.

Details of the evaluator 9 and the address generator 10 both shown in Fig. 3A will now be described with reference to block diagrams of Figs. 3B and 3C.

As shown in Fig. 3B, a gate circuit 21 is provided in the evaluator 9. The subtraction information "S" (digital signal) of the entire image region, which is supplied from the subtraction circuit 3, is applied to the gate circuit 21. Under this condition, when the signals from the cursor generator 8 and the address generator 10 are applied to the gate circuit 21, only the subtraction information "S" defined by the cursor region can pass through the gate circuit 21. The information S is then supplied to an error criterion calculator 22, which obtains an error criterion E(S) from the

gated subtraction information. Meanwhile, the execute switch of the input terminal board 7 is operated to control an $l_n/n_n$ generator address location generator 23, thus shifting a readout address location signal $l_n/n_n$ step by step, where n is the number of shift steps and n=1 to 100. The readout address location signal $l_n/n_n$ applied to a selection circuit 24 and also to a memory 25. This selection circuit 24 is controlled by a control signal supplied through a control line (not shown), as will be described later.

Suppose an X-ray mask image region "C" designated by the cursor is divided into 100 pixels. Then, 100 address location signals $l_n/n_n$ are produced from the $l_n/n_n$ generator 23, where n=1 to 100. In other words, the $l_n/n_n$ generator 23 seqentially generates 100 $l_n/n_n$ address signals, which are supplied to the address generator 10 through the selection circuit 24. Therefore, mask image information is read from 100 addresses ($L+l_n$, N+n, where n=1 to 100) of the mask image memory 2, which have been designated by the address location signal $l_n/n_n$. The mask image information thus read from the memory 2 is subjected to a specific subtraction process, thereby obtaining 100 error criteria E(S). These error criteria E(S) are stored into the memory 25, one after another, combined with the addresses location $l_n/n_n$ (n=1 to 100). A minimum E(S) detector 26 detects the smallest one from the 100 error criteria E(S). The selection circuit 24 is controlled in such that an address location (l, n) corresponding to the detected smallest error criterion E(S) in applied through it to the address generator 10. In other words, the selection circuit 24 is electrically connected to the $l_n/n_n$ generator 23 to supply the address location signals ($l_n$, $n_n$) to the address generator 10 while the error criteria E(S) are being obtained for the entire cursor region. The circuit 24 is electrically connected to the memory 25 to supply to the address generator 10, the address location signal (l, n) combined with the smallest error criterion E(S) after all error criteria E(S) have been obtained.

As shown in Fig. 3C in detail, the address generator 10 commprises an $l_n$ register 31 and an $n_n$ register 32. The $l_n$ register 31 temporarily stores a location $l_n$ of the address location signal $l_n/n_n$ from the evaluator 9. The $n_n$ register 32 temporarily stores the a location "$n_n$" of the address location signal $l_n/n_n$. The address generator 10 further comprises a clock pulse generator 33 which produces a series of pulse signal in synchronism with the display devices 4 and 6 both shown in Fig. 3A. The pulse signal derived from the clock pulse generator 33 is applied to an L counter 34 and an N counter 35 respectively, thereby obtaining a primary readout address location signal (L, N). The location L of the primary readout address location signal (L, N) is supplied from the L counter 34 to one input terminal of an adder 36, and the location N of the signal (L, N) is supplied from the N counter 35 to one input terminal of an adder 37. On the other hand, those adders 36 and 37 receive the location $l_n$ and $n_n$ of the address location signal ($l_n/n_n$) from the $l_n$ register 31 and the $n_n$ register 32 at their other input terminals. Hence, the adder 36, 37 perform the given adding operation so as to produce a secondary readout address location signal ($L+l_n$, $N+n_n$). Those secondary readout address location signal ($L+l_n$, $N+n_n$) are applied only to the mask image memory 2 in the present embodiment. It should be noted that the address location signal (L+l, N+n) for the mask image memory 2 shown in Fig. 3A is finally obtained by detecting the smallest error criterion E(S) in the evaluator 9.

With the X-ray image correction apparatus according to the first embodiment of this invention which has been explained as described above, a specified region is defined on an X-ray contrast image by means of the cursor. A determination is made of the degree of positional coincidence of the X-ray contrast and mask images in said specified region. The address by which an X-ray contrast or mask image is to be read is controlled in accordance with the error criterion E(S) denoting the degree of the above-mentioned determined positional coincidence after both X-ray images are subjected to digital subtraction. Therefore, when the position of a diagnostic spot is changed due to motion of the patient during the angiography, the positional change can be corrected, thereby producing a reliable diagnostic image of high contrast and offering prominent advantages in X-ray medical diagnosis and treatment. Since positional displacement between the X-ray mask and contrast images is corrected simply by designating a cursor region by the input terminal board and by actuating the execute switch and since other operations are automatically carried out, it is very easy to operate the subject X-ray image correction apparatus.

Description will now be given with reference to Fig. 4 of the operation an X-ray image correction apparatus according to a second embodiment of this invention.

As shown in Fig. 4, the error criterion E(S) obtained by the evaluator 9 is supplied to a gain/bias control circuit 11 in place of the address signal-generating circuit 10 of the former embodiment, thereby controlling the gain and biasing values of the output digital signal from the X-ray mask image memory 2. On this point the second embodiment is different from the first embodiment. The gain control voltage "G" and bias control voltage "V" of the gain/bias control circuit 11 are applied on an X-ray mask image signal supplied from the X-ray mask image memory 2 through respective multiplier 12 and adder 13.

A description will now be given of the operation of the X-ray image correction apparatus of Fig. 4 according to the second embodiment of this invention. Similarly, in Fig. 3, an evaluation region is defined by a cursor, and thereafter a subtracted image signal from the subtraction circuit 3 which is not yet corrected is subjected to a prescribed evaluation in the evaluator 9. The

resultant value (= error criterion) E(S) obtained in the evaluator 9 is supplied to the gain/bias control circuit 11, in which the gain control voltage "G" and bias control voltage "V" corresponding to the error criterion E(S) are generated. These control voltages "G", "V" are applied on an X-ray mask image signal supplied from the X-ray mask image memory 2 through the corresponding multiplier 12 and adder 13, thereby correcting the contrast distortion in the cursor region between the substrated image and the mask image. With the second embodiment of Fig. 4, the contrast of an image defined by the cursor region in the X-ray mask image is modified relative to that of the corresponding region in the subtracted X-ray image.

A description will now be given with reference to Fig. 5 of an X-ray image correction apparatus according to a third embodiment of this invention. This embodiment automatically corrects a positional displacement of the cursor regions between the X-ray contrast and mask images and the contrast distortion in a diagnostic region defined by the cursor. As seen from Fig. 5, the third embodiment fundamentally consists of a combination of the arrangements of the first and second embodiments. For the sake of simplicity, therefore, a description will be given of the differences in the arrangement of Fig. 5 from the foregoing ones according to the third embodiment. This third embodiment involves a new type of subtraction circuit 14 in place of that applied in the first and second embodiments. In the input terminal board 7, a by-pass switch and an image selection switch (neither shown) are employed. Upon turning the by-pass switch on, the image signals may pass through the subtraction operation circuit 14. That is, when supplied with an X-ray mask image signal, the new subtraction circuit 14 is inhibited to perform subtraction. Therefore, the X-ray mask image signal is delivered intact to a display device 15. When supplied with an X-ray contrast image signal, the subtraction circuit 14 is also inhibited to perform subtraction. The output terminal of the subtraction circuit 14 is connected via the mixer 5 to the display device 15. The output terminal of the cursor generator 8 is connected via the mixer 5 to the above display device 15. The third embodiment of Fig. 5 is provided with only one display device 15, on the screen of which an X-ray mask image, X-ray contrast image and corrected subtraction image are represented simultaneously or selectively as well known in the art.

A description will now be given of the process of correcting the positional displacement of the X-ray images and the insufficient contrast thereof. In the third embodiment of Fig. 5, the correction process comprises the steps of observing an X-ray mask image and X-ray contrast image on the display device 15, and defining a cursor region with respect to, for example, the X-ray contrast image. An affine transformation image is produced by the affine transformation formula with respect to the cursor region. A difference between the affine tranformation image and X-ray mask image is determined. A final desired diagnostic image is obtained by multiplying the above-described affine transformation image by a gain conversion value.

To describe in more detail, the affine transformation formula is expressed as:

$$\begin{cases} x'=ax+by+c \\ y'=dx+ey+f \end{cases} \quad (3)$$

where the coefficients "a" to "f" are determined from the magnification degree, contraction degree, rotation angle (it is assumed that in all embodiments of this invention, the X-ray contrast image is not rotated with respect to the X-ray mask image, or vice versa) and the extent of parallel movement along the x and y axes of the co-ordinate system. The characters x and y collectively denote a co-ordinate system before the affine transformation is carried out. The characters x' and y' jointly represent a co-ordinate system after the affine transformation is performed.

Throughout the embodiments of this invention, "A" is taken to denote the X-ray contrast image. The co-ordinate system (x,y) of a point in the X-ray contrast image "A" is defined by a cursor. "B" is taken to represent the X-ray mask image. The points in the X-ray mask image "B" which correspond to those (x,y) of the X-ray contrast image "A" are denoted by B(x,y). Now let it be assumed that A' (x,y) is taken to show an X-ray image after the affine transformation is performed; and A''(x,y) is taken to represent an X-ray image after the contrast conversion is carried out. Then the following formula is given:

$$A''(x,y)=g \cdot A'(x,y) \quad (4)$$

where the coefficient "g" denotes a value of the aforementioned gain conversion.

Thereafter, a difference between an X-ray contrast image A''(x,y) obtained after the contrast conversion and an X-ray mask image B(x,y) is determined, and further an absolute value for this difference is taken to determine a total sum. Then a cumulative error value (the previously described error criterion) E(S) is expressed as follows:

$$E(S)=\Sigma|A''(x,y)-B(x,y)| \quad (5)$$

The aforementioned coefficients "a" to "g" are selected to have a proper value so as to minimize E(S). The above-mentioned calculation is repeated, for example, 10 times (this process is referred to as "the hill climb method").

An X-ray mask image signal read out of the X-ray mask image memory 2 is corrected by E(S) now having a minimum value by means of the address signal generator 10 and gain/bias control circuit 11. Subtraction is carried out between a mask image signal thus corrected and X-ray contrast image signal. Thus, a final desired image free from a background image (noise) is displayed on the display device 15.

A description will now be given with reference to Figs. 6A through 6D of a flow chart of a program for automatically carrying out the aforementioned series of calculations. Since a plurality of X-ray images are indicated on a single display device 15, an image memory (not shown) is provided. A step of bit shift operation is included in the last section of the flow chart, for the following reason. In the X-ray image correction apparatus according to the invention, various types of X-ray images are displayed on a single display device 15 simultaneously or in proper time sequence. Therefore, it is necessary to restrict the degree of contrast of the X-ray images to be displayed within a prescribed range. To this end the absolute value image (=corrected subtraction image) which generally has a low contrast level should be processed to have a high contrast level before it is displayed on the display device 15. Otherwise, the absolute value image cannot be observed together with other X-ray images.

The X-ray image correction apparatus of this embodiment is characterized in that a high quality subtracted X-ray image can always be obtained, since not only the positional displacement of both X-ray mask and contrast images but also the contrast thereof is corrected.

While the invention has been described and exemplified with respect to the preferred embodiments, those skilled in the art will readily appreciate that various modifications, changes, omissions and substitions may be made without departing from the spirit of the invention. Throughout the foregoing embodiments, the positional displacement of an X-ray image was corrected by shifting the X-ray image in a horizontal direction. Alternatively, the X-ray image correction apparatus is also adapted to the case where the positional displacement of an X-ray image is corrected by the enlargement, contraction or rotation of the X-ray image. Further, as in the third embodiment, two or more processes, that is, a combination of, for example, the enlargement and rotation of an X-ray image may be employed for the correction of its positional displacement.

The aforementioned subtraction method and the method of calculating an error criterion function may be performed by the conventional process. Throughout the foregoing embodiments, when an X-ray contrast image signal is read out of the X-ray contrast image memory 1, the read address of this memory 1 remains unchanged even when correction is made of a positional displacement between both X-ray mask and contrast images. Alternatively, the address for the X-ray contrast image memory 1 from which the X-ray contrast image signal is to be read out may be changed.

The gain/bias control circuit 11 may be connected to the output terminal of the X-ray contrast image memory 1 in place of the X-ray mask image memory 2.

**Claims**

1. An X-ray image correction apparatus comprising; means for generating a series of X-ray images of an object under examination,

means (4, 5, 6) for displaying the X-ray images,

first storage means (2) for storing in a digital form a mask image selected from said series of X-ray images and taken before an X-ray contrast medium is penetrated into the object,

second storage means (1) for storing in a digital form a contrast image selected from said series of X-ray images and taken after the X-ray contrast medium is penetrated into the object, and

subtraction means (3), connected to said first and second storage means (2, 1), for performing digital subtraction between the digital data of said mask and the contrast images,

characterized by further comprising:

cursor means (7, 8) for defining a region of interest within said contrast image, while monitoring said contrast image displayed on the displaying means (4, 5, 6), in such a manner that the contrast level of said region of interest remains substantially unchanged even when the X-ray contrast medium is penetrated thereinto,

error criterion producing means (9), connected to both said cursor means (7, 8) and the subtraction means (3), for producing error criterion by calculating an error evaluating function with respect to the degree of coincidence between said region of interest of the contrast image and a corresponding region of the mask image, and

control means (10, 11) connected to both the error criteria producing means (9) and the subtraction means (3), for controlling readout of one of said mask and contrast images data so as to minimize the error criterion.

2. The X-ray image correction apparatus according to claim 1, characterized in that said cursor means comprises an input terminal board (7) having a cursor-setting component and a cursor generator (8) for producing a cursor signal under the control of the cursor-setting component.

3. The X-ray image correction apparatus according to claim 1, characterized in that said control means comprises a gain/bias control circuit (11) for generating a gain control signal and a bias control signal, and a multiplier/adder circuit (12, 13) which receives the gain and bias control signals, and is connected between one of the first and second storage means and the subtraction means (3), thereby deriving data from one of the first and second storage means (2,1), for further subtraction in such a manner that the error criterion is minimized.

4. The X-ray image correction apparatus according to claim 1, characterized in that said control means comprises an address signal generator (10) producing an address control

signal so as to control and to drive one of the first and second X-ray images data from said first and second storage means (2, 1) for further subtraction in such a manner that an error criterion is minimized.

5. The X-ray image correction apparatus according to claim 1, characterized further by comprising:

a mixer (5) connected to the second storage means (1) and cursor means (7, 8), and

second display means (6) connected to the mixer (5) to display the second X-ray image with the specific region defined by said cursor means (7, 8).

6. The X-ray correction apparatus according to claim 1, characterized further by comprising:

addressing means (10) for providing first and second addresses sequentially to said first and second storing means, each pair of addresses assigning a pair of pixel data in said first and second images to be readout from said first and second storing means (1, 2) respectively wherein said subtracting means (3) subtract one of the paired pixel data from the other one read out from said first and second storing means (1, 2), and

means for adding a relative address to one of first and second addresses, said relative address being so derived as to minimize said error criterion.

**Patentansprüche**

1. Röntgenbildverbesserungs- oder -korrektionsgerät, umfassend

eine Einrichtung zum Erzeugen einer Reihe von Röhtgenbildern eines Untersuchungsobjekts,

Einheiten (4, 5, 6) zum Anzeigen oder Wiedergeben der Röntgenbilder,

eine erste Speichereinheit (2) zum in digitaler Form erfolgenden Speichern eines aus der Reihe von Röntgenbildern ausgewählten und vor dem Einspritzen eines Röntgenkontrastmittels in das Untersuchungsobjekt aufgenommenen Maskenbilds,

eine zweite Speichereinheit (1) zum in digitaler Form erfolgenden Speichern eines aus der Reihe von Röntgenbildern ausgewählten und nach dem Einspritzen des Röntgenkontrastmittels in das Untersuchungsobjekt aufgenommenen Kontrastbilds und

eine an erste und zweite Speichereinheit (2, 1) angeschlossene Subtrahiereinheit (3) zur Durchführung einer digitalen Subtraktion zwischen den Digitaldaten der Masken- und Kontrastbilder,

gekennzeichnet durch

eine Positionsanzeigereinrichtung (7, 8) zum Definieren eines interessierenden Bereichs innerhalb des Kontrastbilds wärend der Überwachung oder Beobachtung des auf den Anzeigeeinheiten (4, 5, 6) wiedergegebenen Kontrastbilds in der Weise, daß der Kontrastpegel des interessierenden Bereichs auch beim Einspritzen des Röntgenkontrastmittels in ihn im westentlichen unverändert bleibt,

eine sowohl mit der Positionsanzeigereinrichtung (7, 8) als auch der Subtrahiereinheit (3) verbundene Fehlerkriteriumerzeugungseinheit (9) zum Erzeugen eines Fehlerkriteriums durch Berechnen einer Fehlerauswertfunktion in bezug auf den Koinzidenzgrad zwischen dem interessierenden Bereich des Kontrastbilds und einem entsprechenden Bereich des Maskenbilds sowie

eine sowohl mit der Fehlerkriteriumerzeugungseinheit (9) als auch der Subtrahiereinheit (3) verbundene Steuereinrichtung (10, 11) zum Steuern des Auslesens eines der Masken- und Kontrastbilder zwecks Minimierung des Fehlerkriteriums.

2. Röntgenbildkorrektionsgerät nach Anspruch 1, dadurch gekennzeichnet, daß die Positionsanzeigereinrichtung ein Eingabeanschlußfeld (7) mit einer Positionsanzeiger-Vorgabekomponente und einen Positionsanzeigergenerator (8) zum Erzeugen eines Positionsanzeigersignals unter der Steurung der Positionsanzeiger-Vorgabekomponente aufweist.

3. Röntgenbildkorrektionsgerät nach Anspruch 1, dadurch gekennzeichnet, daß die Steuereinrichtung eine Verstärkung/Vorspannung-Regelschaltung (11) zum Erzeugen eines Verstärkungsregelsignals und eines Vorspannungsregelsignals sowie eine Multiplizier/Addierschaltung (12, 13) aufweist, welche die Verstärkungs- und Vorspannungsregelsignale abnimmt und die zwischen eine der ersten und zweiten Speichereinheiten und die Subtrahiereinheit (3) geschaltet ist, um damit Daten von einer der ersten und zweiten Speichereinheiten (2, 1) abzunehmen für eine weitere Subtraktion in der Weise, daß das Fehlerkriterium minimiert wird.

4. Röntgenbildkorrektionsgerät nach Anspruch 1, dadurch gekennzeichnet, daß die Steuereinrichtung einen Adreßsignalgenerator (10) zur Erzeugung eines Adreßsteuersignals zum Regeln und Ansteuern einer der ersten und zweiten Röntgenbilddaten von erster und zweiter Speichereinheit (2, 1) zwecks weiterer Subtraktion in der Weise, daß das Fehlerkriterium minimiert wird, aufweist.

5. Röntgenbildkorrektionsgerät nach Anspruch 1, gekennzeichnet durch

einen mit der zweiten Speichereinheit (1) und der Positionsanzeigereinrichtung (7, 8) verbundenen Mischer (5) und

eine mit dem Mischer (5) verbundene zweite Anzeigeeinheit (6) zum Anzeigen oder Wiedergeben des zweiten Röntgenbilds mit dem durch die Positionsanzeigeeinrichtung (7, 8) definierten spezifischen Bereich.

6. Röntgenbildkorrektionsgerät nach Anspruch 1, gekennzeichnet durch eine Adreßeinheit (10) zum sequentiellen Liefern von ersten und zweiten Adressen zu erster und zweiter Speichereinheit, wobei jedes Paar von Adressen ein Paar von Pixeldaten in den aus erster und zweiter Speichereinheit (2, 1) auszulesenden ersten bzw. zweiten Bildern bezeichnet oder zuweist, und wobei die Subtrahiereinheit (3) eine der paarigen Pixeldateneinheiten von der anderen, aus erster und

zweiter Speichereinheit (1, 2) ausgelesenen (Dateneinheit) subtrahiert, und

eine Einrichtung zum Addieren einer Relativadresse zu einer der ersten und zweiten Adressen, wobei die Relativadresse so gewonnen oder abgeleitet ist, daß das Fehlerkriterium minimiert wird.

**Revendications**

1. Dispositif de correction d'image à rayons X comprenant:

un moyen pour engendrer une série d'images à rayons X d'un objet qui est examiné,

des moyens (4, 5, 6) pour visualiser les images à rayons X,

un premier moyen de mémorisation ou mémoire (2) pour mémoriser sous forme numérique une image de masque sélectionnée parmi la série d'images à rayons X et prise avant qu'un milier de contraste aux rayons X ait pénétré dans l'objet,

un second moyen de mémorisation ou mémoire (1) pour mémoriser sous forme numérique une image de contraste sélectionnée parmi la série d'images à rayons X et prise après que le milieu de contraste aux rayons X ait pénétré dans l'objet, et

un moyen de soustraction (3), connecté aux première et seconde mémoires (2, 1), pour exécuter une soustraction numérique entre les données numériques des images de masque et de contraste,

caractérisé en ce qu'il comprend en outre:

un moyen à index (7, 8) pour déinir une région intéressante dans l'image de contraste, tout en contrôlant l'image de contraste visualisée dans les moyens de visualisation (4, 5, 6), de telle manière que le niveau de contraste de la région intéressante reste essentiellement inchangé, même quand le milieu de contraste aux rayons X y a pénétré,

un moyen de production de critère d'erreur (9), connecté à la fois au moyen à index (7, 8) et au moyen de soustraction (3), pour produire un critère d'erreur en calculant une fonction d'évaluation d'erreur par rapport au degré de coïncidence entre la région intéressante de l'image de contraste et une région correspondante de l'image de masque, et

un moyen de commande (10, 11) connecté à la fois au moyen de production de critère d'erreur (9) et au moyen de soustraction (3), pour commander la lecture d'une des données des images de masque et de contraste de manière à réduire au minimum le critère d'erreur.

2. Dispositif de correction d'image à rayons X selon la revendication 1, caractérisé en ce que le moyen à index comprend un panneau de bornes d'entrée (7) comportant un composant d'établissement d'index et un générateur d'index (8) pour produire un signal d'index sous la commande du composant d'établissement d'index.

3. Dispositif de correction d'image à rayons X selon la revendication 1, caractérisé en ce que le moyen de commande comprend un circuit de réglage de gain/ de polarisation (11) pour engendrer un signal de réglage de gain et un signal de réglage de polarisation, et un circuit multiplicateur/ additionneur (12, 13) que reçoit les signaux de réglage de gain et de polarisation, et qui est connecté entre l'une des première et seconde mémoires et le moyen de soustraction (3), pour dériver ainsi des données de l'une des première et seconde mémoires (2, 1), pour une autre soustraction de telle manière que le critère d'erreur soit réduit au minimum.

4. Dispositif de correction d'image à rayons X selon la revendication 1, caractérisé en ce que le moyen de commande comprend un générateur de signaux d'adresse (a0) produisant un signal de contrôle d'adresse de manière à contrôler et exciter l'une des première et second données d'images à rayons X provenant des première et seconde mémoires (2, 1) pour une autre soustraction de telle manière qu'un critère d'erreur soit réduit au minimum.

5. Dispositif de correction d'image à rayons X selon la revendication 1, caractérisé en ce qu'il comprend en outre:

un mélangeur (5) connecté à la seconde mémoire (1) et au moyen à index (7, 8), et

un second moyen de visualisation (6) connecté au mélangeur (5) pour visualiser la seconde image à rayons X, la région spécifique étant définie par le moyen à index (7, 8).

6. Dispositif de correction d'image à rayons X selon la revendication 1, caractérisé en ce qu'il comprend en outre:

un moyen d'adressage (10) pour fournir des première et seconde adresses séquentiellement aux première et seconde mémoires, chaque paire d'adresses affectant une paire de données d'éléments d'image dans les première et seconde images à lire dans les première et seconde mémoires (1, 2) respectivement, dans lequel le moyen de soustraction (3) soustrait une des données d'éléments d'image de l'autre dans la paire lue dans les première et seconde mémoires (1, 2), et

un moyen pour additionner une adresse relative avec l'une des première et seconde adresses, l'adresse relative étant dérivée ainsi de manière à réduire au minimum le critère d'erreur.

FIG. 1B

CONTRAST IMAGE

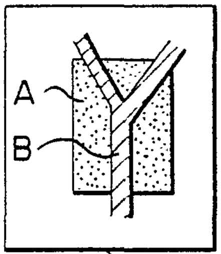


FIG. 1A

MASK IMAGE

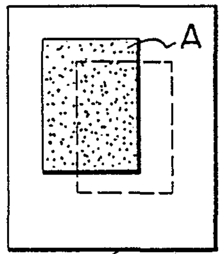


FIG. 1C

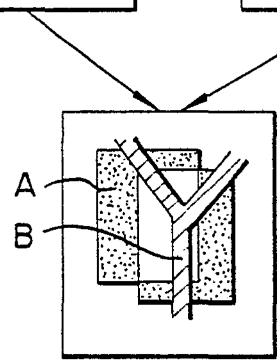


SUBTRACTED IMAGE

F I G. 2A

MASK IMAGE

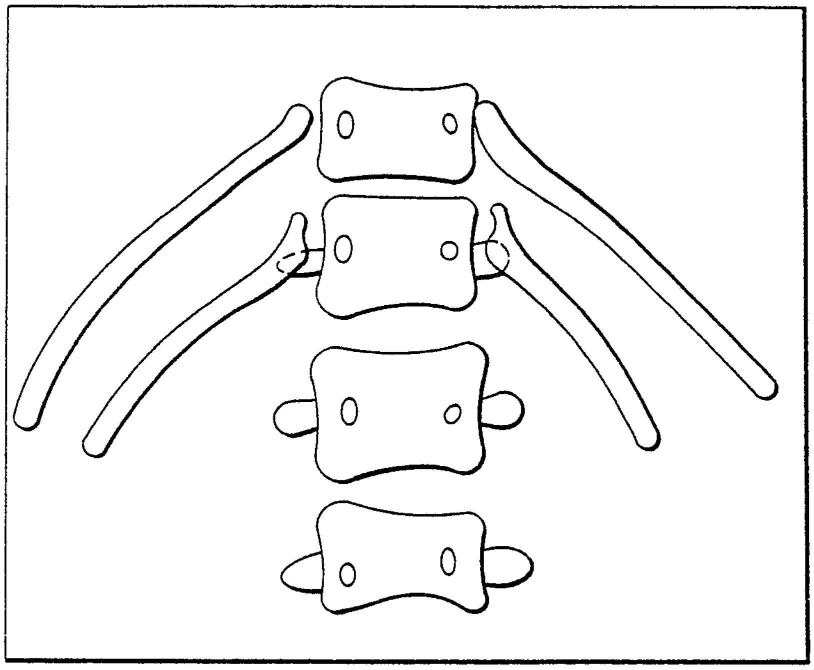

F I G. 2B

CONTRAST IMAGE

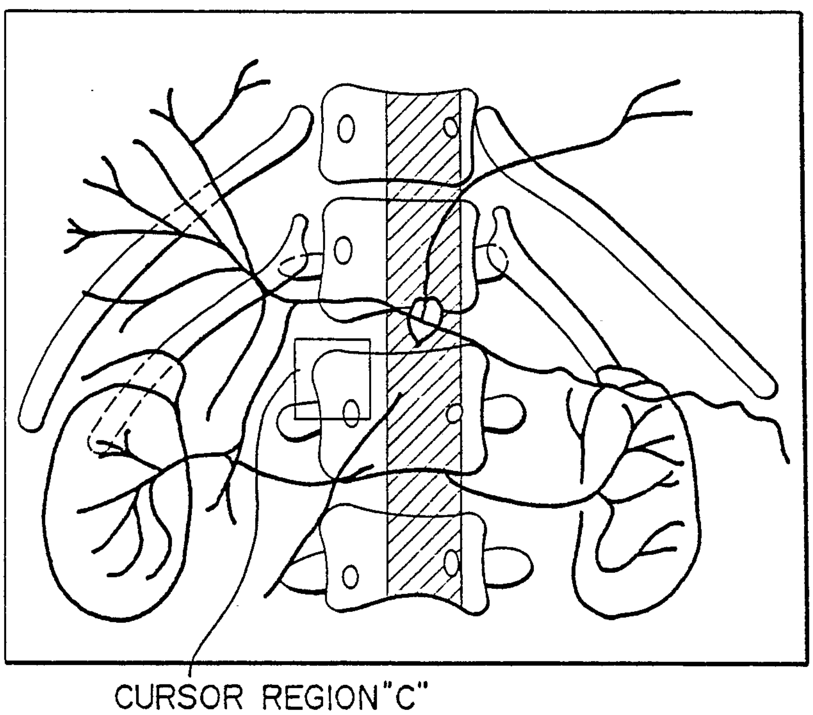

F I G. 3A

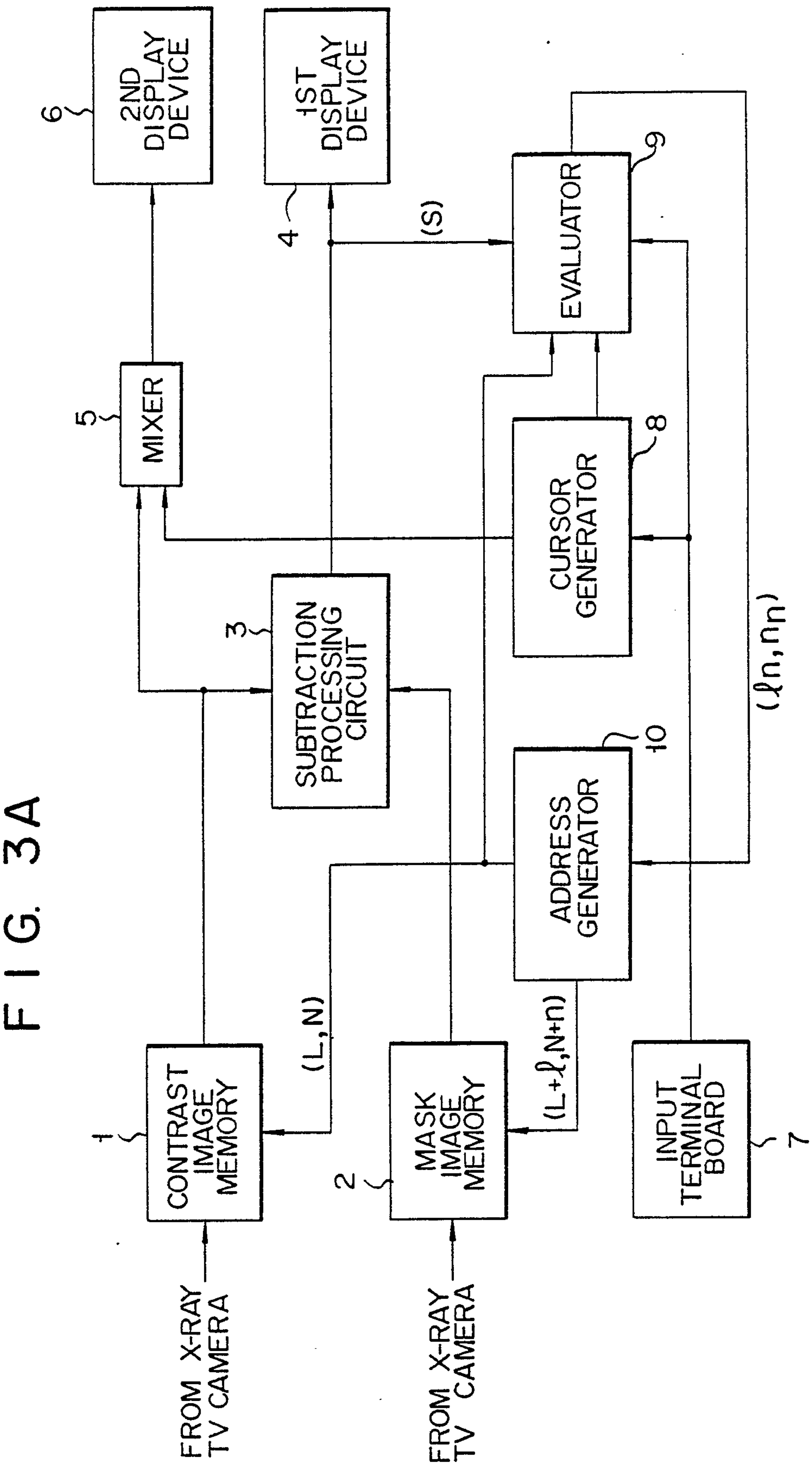
FROM X-RAY TV CAMERA
CONTRAST IMAGE MEMORY
1
FROM X-RAY TV CAMERA
MASK IMAGE MEMORY
2
INPUT TERMINAL BOARD
7
(L,N)
(L+ℓ,N+n)
ADDRESS GENERATOR
10
SUBTRACTION PROCESSING CIRCUIT
3
CURSOR GENERATOR
8
(ℓn,nn)
MIXER
5
EVALUATOR
9
(S)
1ST DISPLAY DEVICE
4
2ND DISPLAY DEVICE
6

FIG. 3B

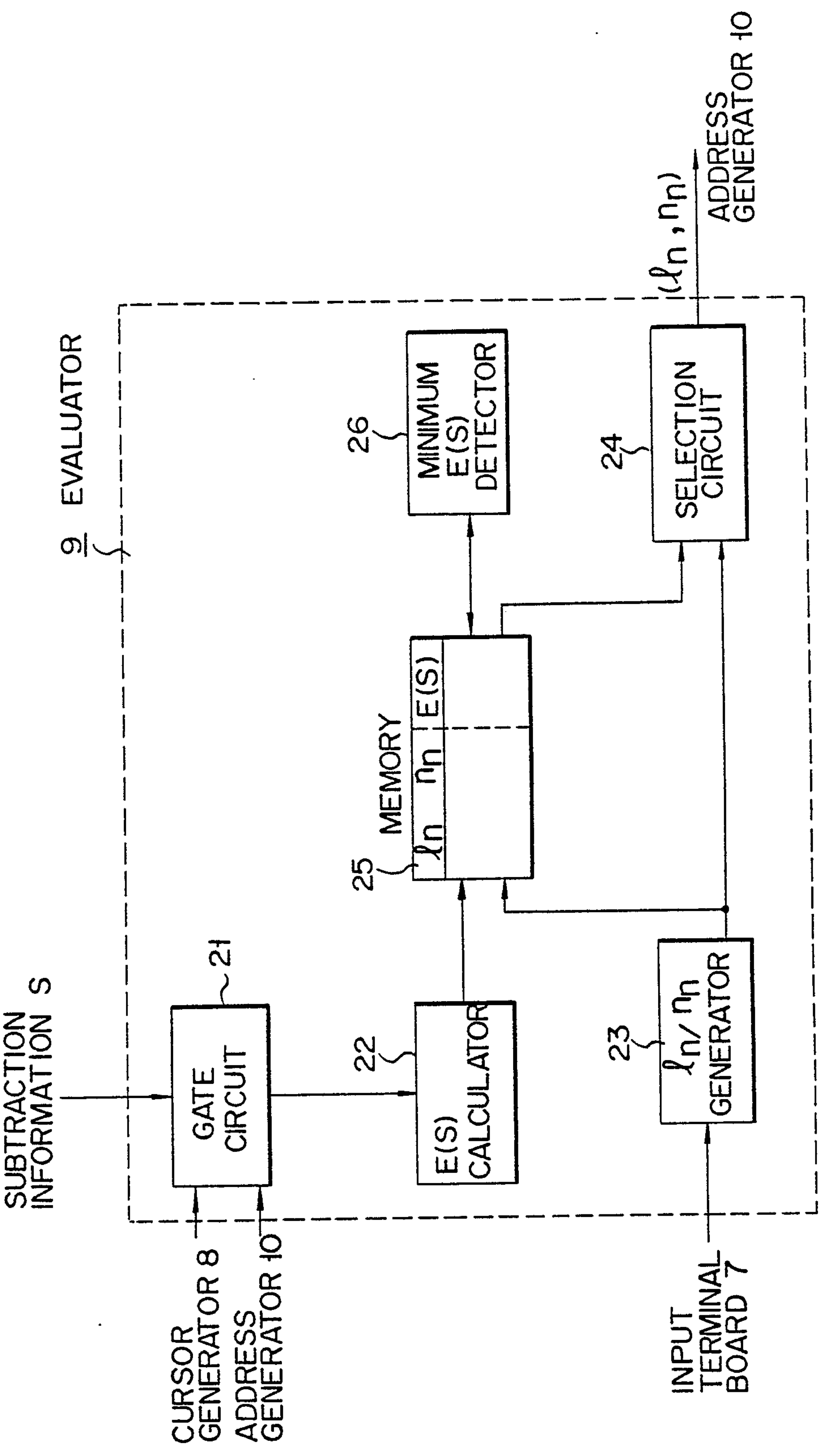
9 EVALUATOR
SUBTRACTION INFORMATION S
GATE CIRCUIT
21
22
E(S) CALCULATOR
25
MEMORY
$\ell_n$ $n_n$ E(S)
26
MINIMUM E(S) DETECTOR
23
$\ell_n$/ $n_n$ GENERATOR
24
SELECTION CIRCUIT
($\ell_n$ , $n_n$)
ADDRESS GENERATOR 10
CURSOR GENERATOR 8
ADDRESS GENERATOR 10
INPUT TERMINAL BOARD 7

FIG. 3C

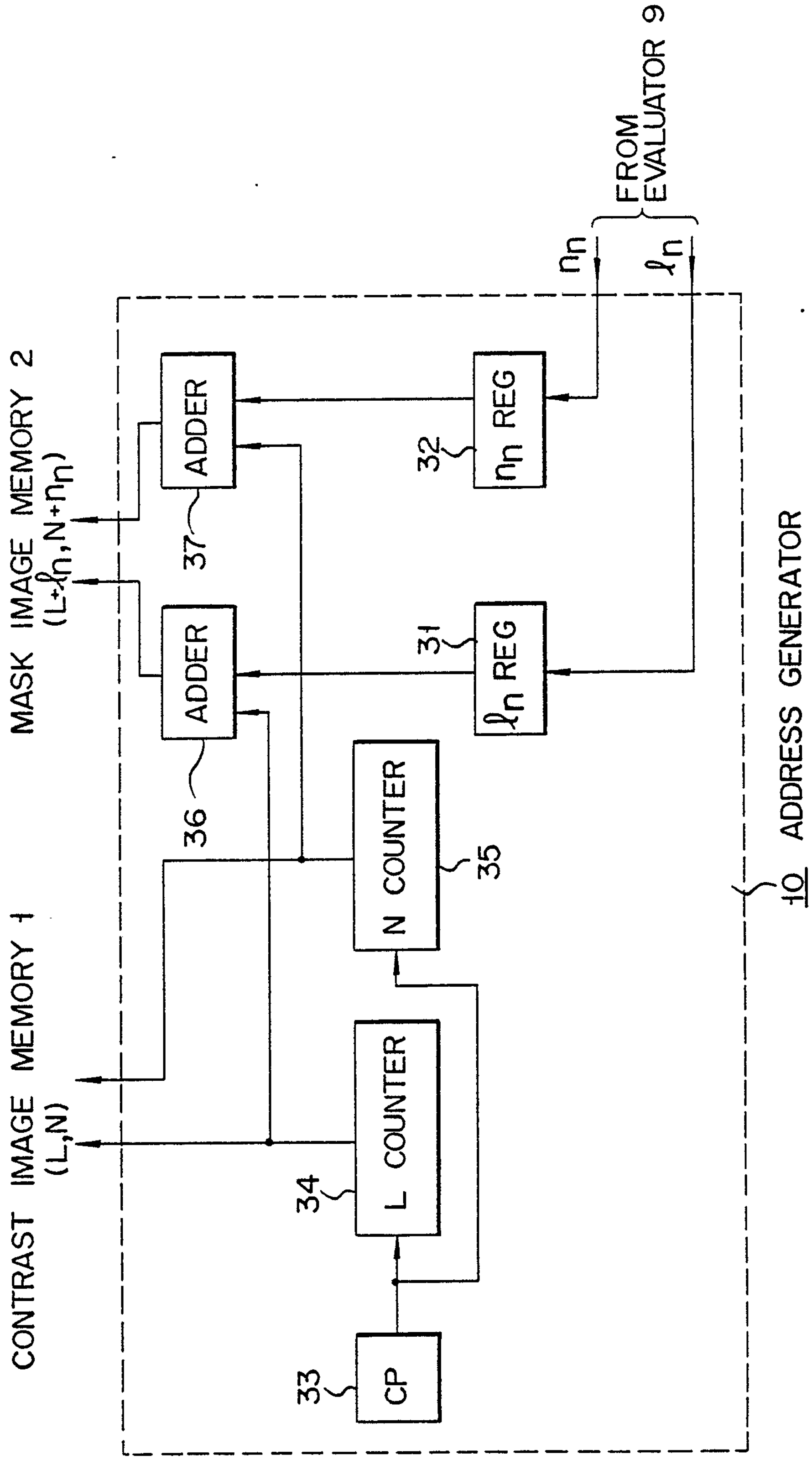
CONTRAST IMAGE MEMORY 1
(L,N)
MASK IMAGE MEMORY 2
(L+ℓn, N+nn)
ADDER
36
ADDER
37
L COUNTER
34
N COUNTER
35
CP
33
ℓn REG
31
nn REG
32
nn
ℓn
FROM
EVALUATOR 9
10 ADDRESS GENERATOR

FIG. 4

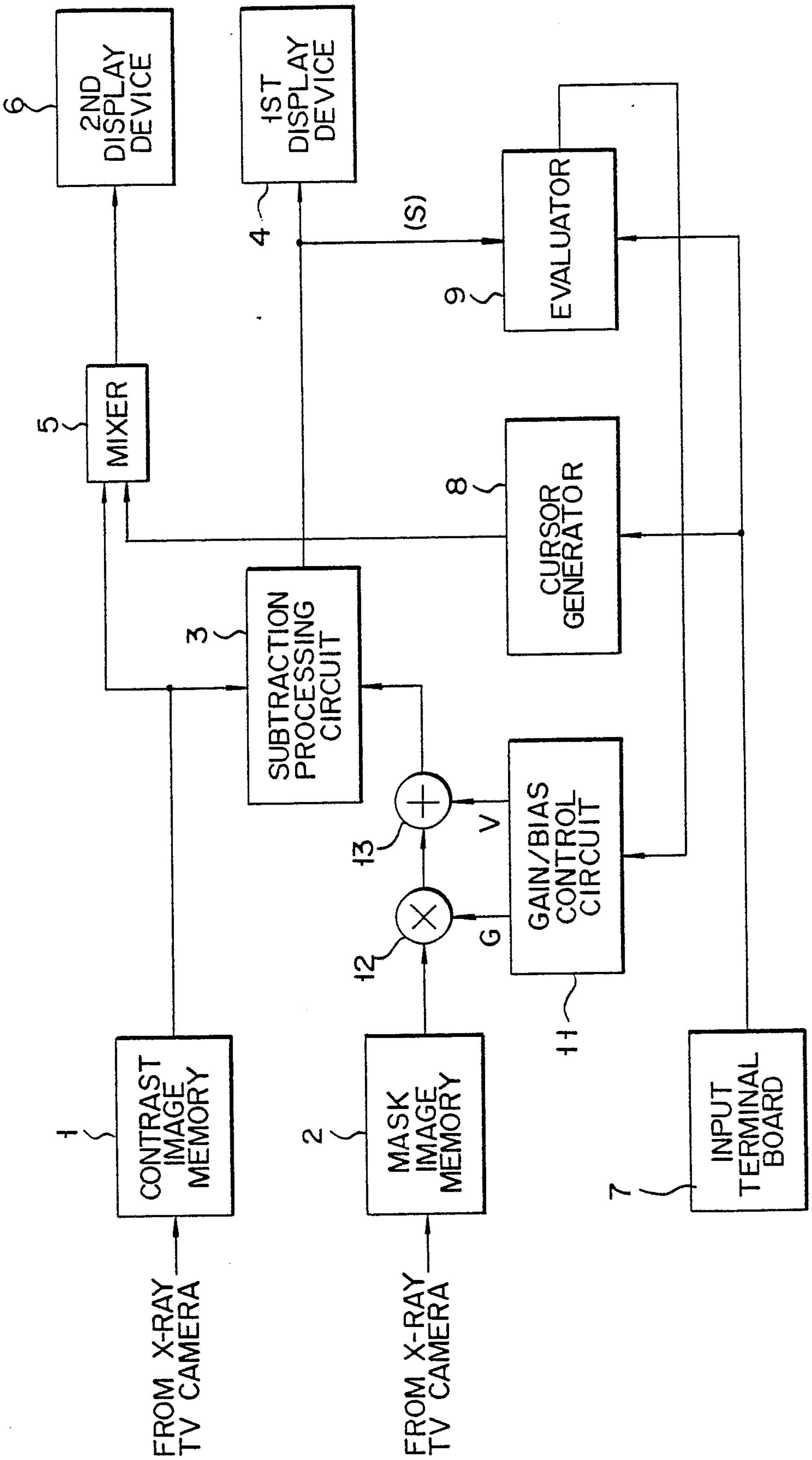
FROM X-RAY TV CAMERA
FROM X-RAY TV CAMERA
1
CONTRAST IMAGE MEMORY
2
MASK IMAGE MEMORY
7
INPUT TERMINAL BOARD
12
13
G
V
11
GAIN/BIAS CONTROL CIRCUIT
3
SUBTRACTION PROCESSING CIRCUIT
8
CURSOR GENERATOR
5
MIXER
9
EVALUATOR
(S)
4
1ST DISPLAY DEVICE
6
2ND DISPLAY DEVICE

F I G. 5

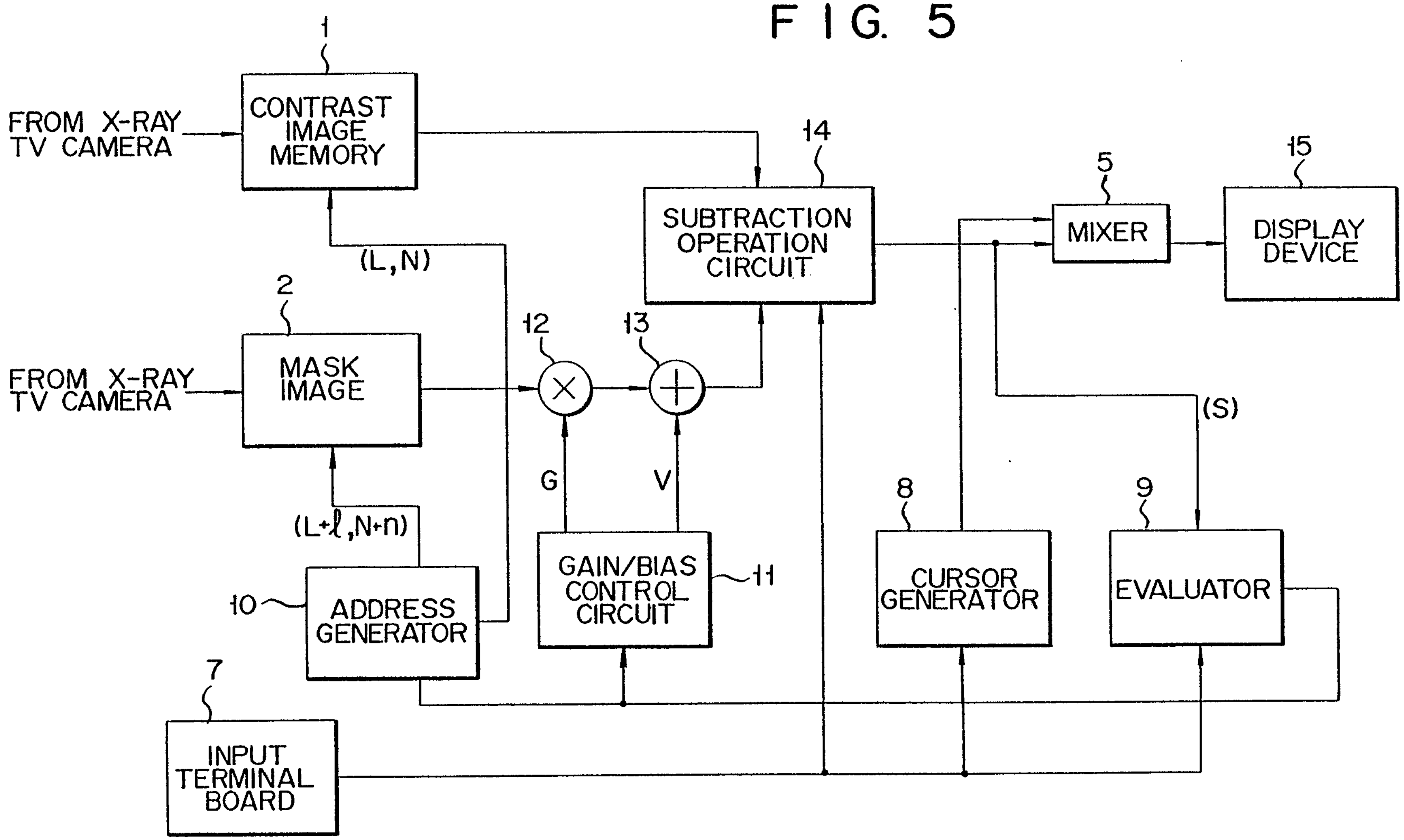
FROM X-RAY TV CAMERA
1
CONTRAST IMAGE MEMORY
(L,N)
FROM X-RAY TV CAMERA
2
MASK IMAGE
(L+ℓ,N+n)
10
ADDRESS GENERATOR
7
INPUT TERMINAL BOARD
12
13
G
V
GAIN/BIAS CONTROL CIRCUIT
11
14
SUBTRACTION OPERATION CIRCUIT
5
MIXER
15
DISPLAY DEVICE
(S)
8
CURSOR GENERATOR
9
EVALUATOR

F I G. 6A

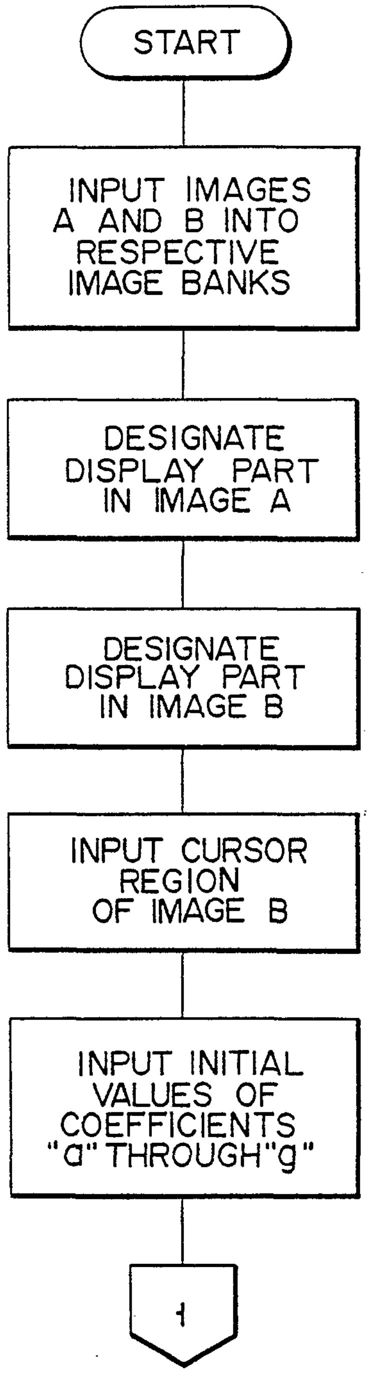
START
INPUT IMAGES A AND B INTO RESPECTIVE IMAGE BANKS
DESIGNATE DISPLAY PART IN IMAGE A
DESIGNATE DISPLAY PART IN IMAGE B
INPUT CURSOR REGION OF IMAGE B
INPUT INITIAL VALUES OF COEFFICIENTS "a" THROUGH "g"
1

FIG. 6B

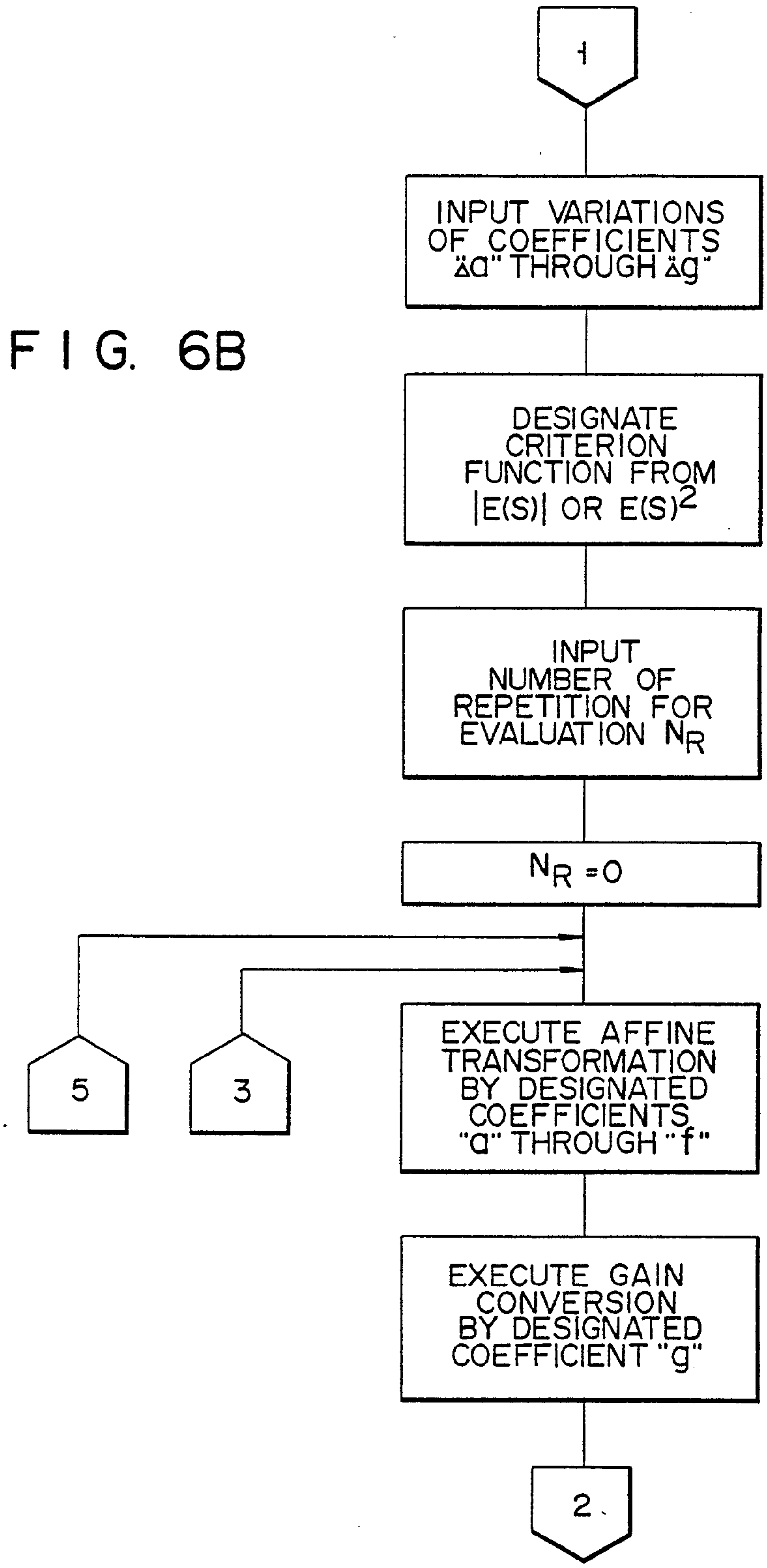
1
INPUT VARIATIONS OF COEFFICIENTS "Δa" THROUGH "Δg"
DESIGNATE CRITERION FUNCTION FROM |E(S)| OR E(S)^2
INPUT NUMBER OF REPETITION FOR EVALUATION $N_R$
$N_R = 0$
5
3
EXECUTE AFFINE TRANSFORMATION BY DESIGNATED COEFFICIENTS "a" THROUGH "f"
EXECUTE GAIN CONVERSION BY DESIGNATED COEFFICIENT "g"
2

FIG. 6C

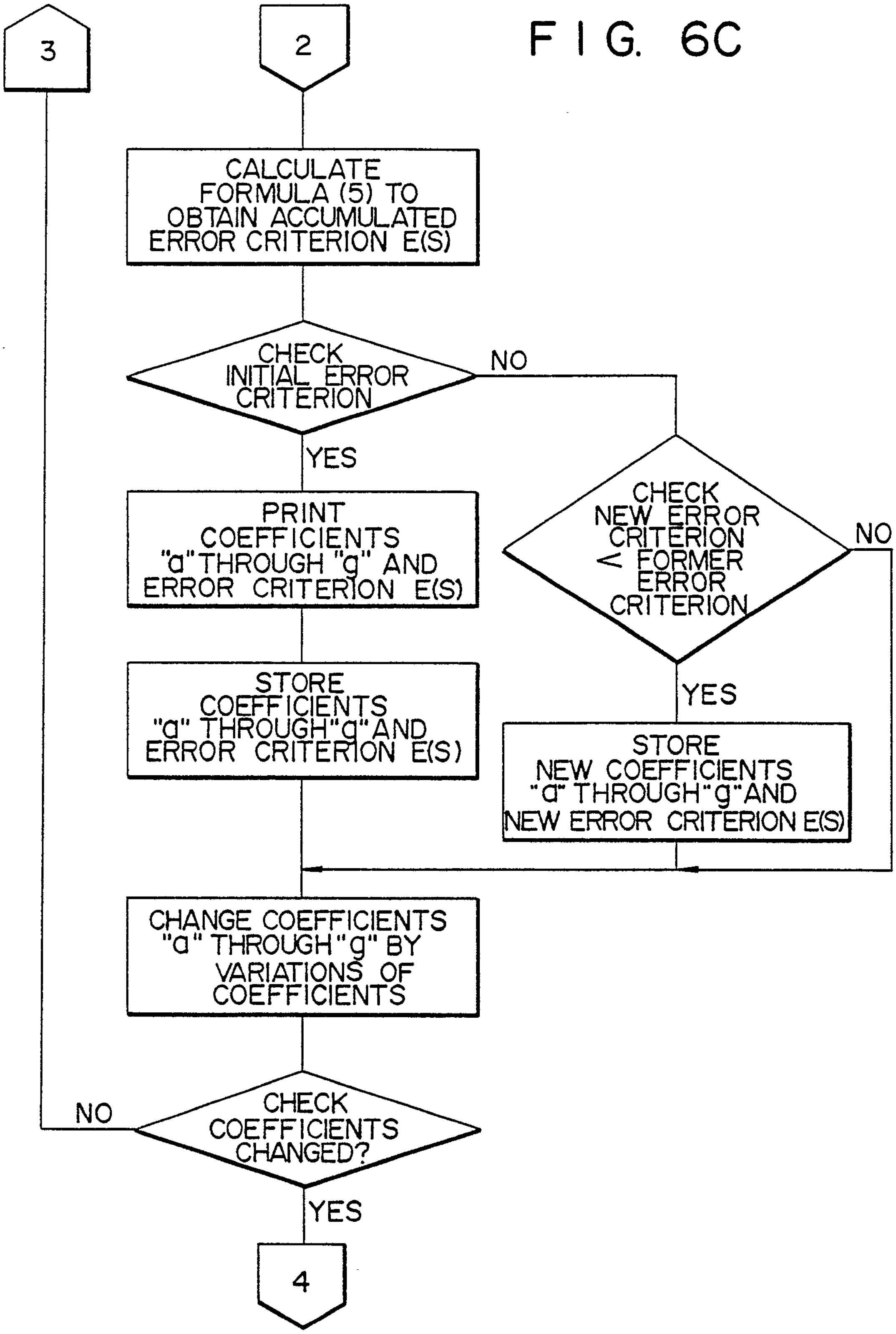
3
2
CALCULATE FORMULA (5) TO OBTAIN ACCUMULATED ERROR CRITERION E(S)
CHECK INITIAL ERROR CRITERION
NO
YES
PRINT COEFFICIENTS "a" THROUGH "g" AND ERROR CRITERION E(S)
CHECK NEW ERROR CRITERION < FORMER ERROR CRITERION
NO
YES
STORE COEFFICIENTS "a" THROUGH "g" AND ERROR CRITERION E(S)
STORE NEW COEFFICIENTS "a" THROUGH "g" AND NEW ERROR CRITERION E(S)
CHANGE COEFFICIENTS "a" THROUGH "g" BY VARIATIONS OF COEFFICIENTS
CHECK COEFFICIENTS CHANGED?
NO
YES
4

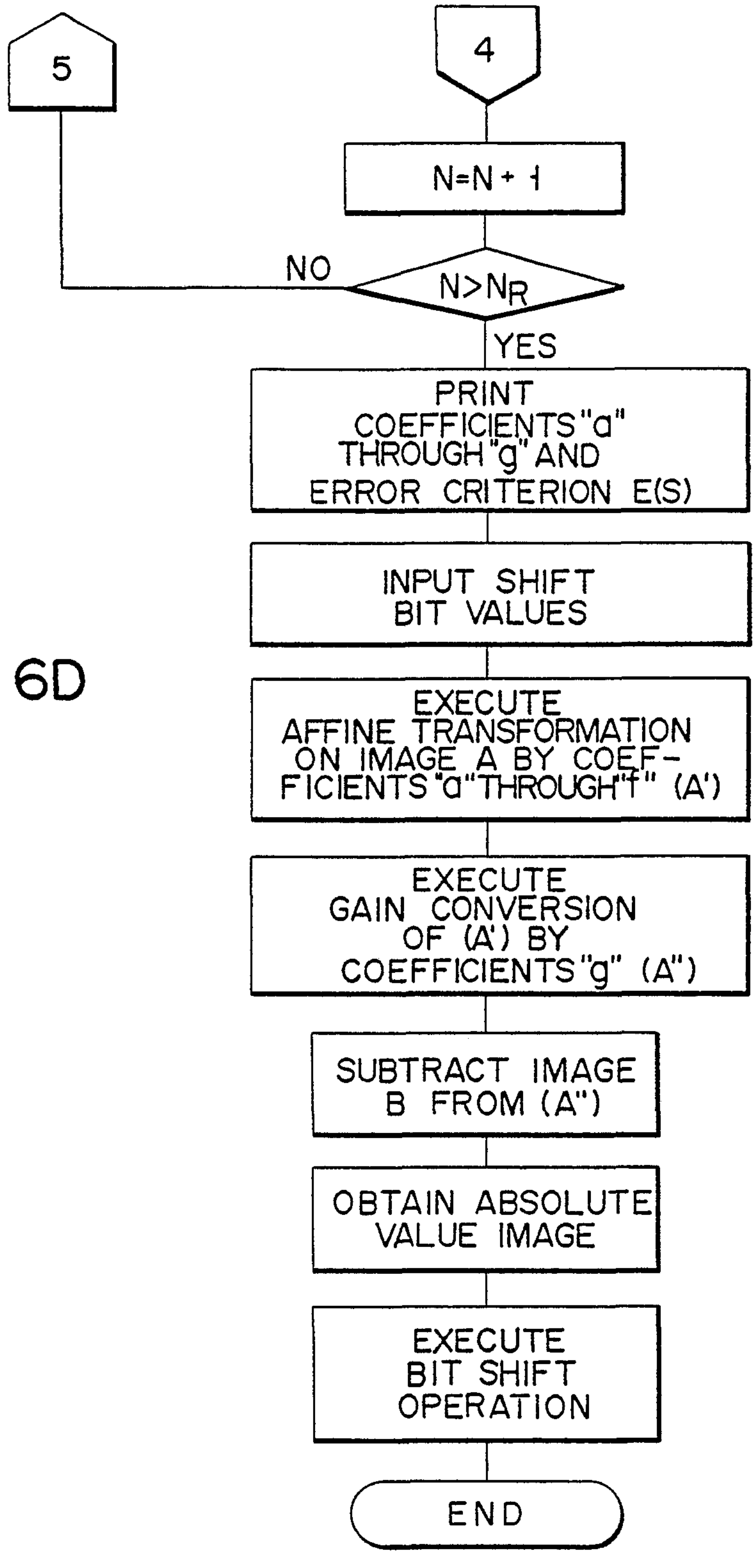
5
4
N=N+1
NO
N>NR
YES
PRINT COEFFICIENTS "a" THROUGH "g" AND ERROR CRITERION E(S)
INPUT SHIFT BIT VALUES
EXECUTE AFFINE TRANSFORMATION ON IMAGE A BY COEF-FICIENTS "a" THROUGH "f" (A')
EXECUTE GAIN CONVERSION OF (A') BY COEFFICIENTS "g" (A")
SUBTRACT IMAGE B FROM (A")
OBTAIN ABSOLUTE VALUE IMAGE
EXECUTE BIT SHIFT OPERATION
END

FIG. 6D